(19) Europäisches Patentamt
European Patent Office
Office européen des brevets

(11) **EP 4 570 535 B1**

(12) **EUROPEAN PATENT SPECIFICATION**

(45) Date of publication and mention
of the grant of the patent:
**01.04.2026 Bulletin 2026/14**

(21) Application number: **23215505.1**

(22) Date of filing: **11.12.2023**

(51) International Patent Classification (IPC):
**B60C 23/04** (2006.01)      **B60K 28/14** (2006.01)
**B60T 7/12** (2006.01)      **B60W 30/02** (2012.01)
**B60W 30/09** (2012.01)

(52) Cooperative Patent Classification (CPC):
**B60C 23/04; B60C 23/0461; B60K 28/14;
B60T 7/12; B60W 30/02; B60W 30/09**

(54) **A CONTROL UNIT AND A METHOD FOR EARLY DETECTION AND RESPONSE TO TIRE EXPLOSIONS IN HEAVY-DUTY VEHICLES**

STEUEREINHEIT UND VERFAHREN ZUR FRÜHERKENNUNG UND REAKTION AUF REIFENEXPLOSIONEN IN SCHWERLASTFAHRZEUGEN

UNITÉ DE COMMANDE ET PROCÉDÉ DE DÉTECTION PRÉCOCE ET DE RÉPONSE À DES EXPLOSIONS DE PNEU DANS DES VÉHICULES UTILITAIRES LOURDS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**18.06.2025 Bulletin 2025/25**

(73) Proprietor: **VOLVO TRUCK CORPORATION
405 08 Göteborg (SE)**

(72) Inventors:
- **JONASSON, Mats
  433 49 Partille (SE)**
- **RYDSTRÖM, Mats
  427 39 Billdal (SE)**

(74) Representative: **Ström & Gulliksson AB
P.O. Box 4188
203 13 Malmö (SE)**

(56) References cited:
EP-A2- 1 659 006      DE-A1- 102014 226 705
US-A- 5 696 681      US-A1- 2018 065 428

**Description**

**TECHNICAL FIELD**

The invention relates generally to tire explosion detection. In particular aspects, the invention relates to a control unit and a method for early detection and response to tire explosions in heavy-duty vehicles. The invention can be applied to heavy-duty vehicles, such as trucks, buses, and construction equipment, among other vehicle types. Although the invention may be described with respect to a particular vehicle, the invention is not restricted to any particular vehicle.

**BACKGROUND**

In vehicle motion management and control, rapid detection of tire explosions, particularly on the front axle of heavy-duty vehicles such as trucks, presents a significant technical challenge. Detecting a tire explosion in a short interval after the incident is crucial for maintaining vehicle stability and control. Current methods, such as those relying on tire pressure monitoring systems (TPMS) have limitations in their robustness and response time. Testing has shown that TPMS often fails to timely signal tire explosions, which is critical for ensuring vehicle safety. The response time for advanced TPMS solutions is around 500 ms, identified as the maximum allowable detection interval to effectively respond to a tire explosion and guarantee vehicle stability and control. The problem is further complicated in heavy-duty trucks that exhibit high parametric uncertainty, including variability in tire conditions and friction, and those with significant coupling between wheel speeds and lateral motion. Tire pressure monitoring systems are known from EP1659006A2, US5696681A, US2018/065428A1 and US2018/065428A1.

The aforementioned challenges highlight the difficulty in accurate and timely detection of tire explosions, emphasizing a need for improved solutions in vehicle motion management and control that are specifically developed to address detection of tire explosions. These challenges are especially critical for the tires on a steerable front axle, whereas the rear axle(s) are generally less critical, benefiting from the redundancy provided by twin tires and/or multiple axles.

**SUMMARY**

According to a first aspect of the invention, a control unit for early detection and response to a tire explosion in a heavy-duty vehicle is disclosed. The control unit is configured to obtain, through a vehicle interface, sensor data of a first and a second tire explosion detection system, where the first tire explosion detection system has a lower response time than the second system. The control unit is configured to detect a tire explosion from the sensor data of the first system, and in response to detecting the tire explosion, prepare the vehicle for a safety maneuver. The control unit is configured to confirm the tire explosion by detecting the tire explosion from the sensor data of the second system, and in response to confirming the tire explosion, execute the safety maneuver. The first aspect of the disclosure may seek to mitigate problems associated with tire explosion detection systems such as their lack of robustness and delayed response times. A technical benefit may include early detection and response to tire explosions, which improves safety margins and enables timely intervention for ensuring vehicle stability and control.

Optionally in some examples, including in at least one preferred example, the first tire explosion detection system comprises a pressure switch for detection of a pressure drop and detecting the tire explosion by the first system comprises assessing the pressure drop. A technical benefit of using a pressure switch may include near-instantaneous detection of a tire pressure drop by the first tire explosion system, which facilitates preparation for the safety maneuver.

Optionally in some examples, including in at least one preferred example, the second tire explosion detection system comprises individual wheel speed sensors for measuring individual front wheel speeds ($\omega_{11}$, $\omega_{12}$) and detecting the tire explosion by the second system comprises assessing individual front wheel speeds ($\omega_{11}$, $\omega_{12}$). A technical benefit of using individual wheel speed sensors may include enhanced reliability in confirming the tire explosion by the second tire explosion system.

Optionally in some examples, including in at least one preferred example, the second tire explosion detection system comprises at least one of an IMU, an RTK receiver, a camera, a lidar sensor and a radar sensor for measuring lateral motion and detecting the tire explosion by the second system comprises assessing the lateral motion. A technical benefit of using an IMU, alone or in combination with the individual wheel speed sensors, may include enhanced reliability in confirming the tire explosion by the second tire explosion system.

Optionally in some examples, including in at least one preferred example, the control unit is further configured to switch to a fault tolerant vehicle motion management, VMM, mode where any malfunctioning wheel is isolated and control commands are directed solely to functional wheels. A technical benefit of switching to a fault tolerant VMM mode may include avoiding sending control commands to a malfunctioning wheel that may further impair stability and control of the vehicle.

Optionally in some examples, including in at least one preferred example, the control unit is further configured to prepare the vehicle for a safety maneuver by pressurizing the brake system to achieve pretension. A technical benefit of pressurizing the brake system to achieve pretension may include enabling immediate brake engagement upon the second system confirming the tire explosion.

Optionally in some examples, including in at least one preferred example, the safety maneuver comprises immediate activation of the brake system. A technical benefit of immediate activation of the brake system may include the reduction of the vehicle's speed to a level that ensures stability and control.

Optionally in some examples, including in at least one preferred example, the control unit is further configured to prepare the vehicle for a safety maneuver by allowing the steering system to apply higher steering torque to be used for controlling the steering angle. A technical benefit of allowing the steering system to apply higher steering torque may include improved handling of unexpected lateral motion, thereby reducing the risk of lane deviation after a tire explosion.

Optionally in some examples, including in at least one preferred example, the safety maneuver comprises immediate activation of the brake system. A technical benefit of immediate activation of the brake system may include the reduction of the vehicle's speed to a level that ensures stability and control.

According to a second aspect of the invention, a heavy-duty vehicle is disclosed. The heavy-duty vehicle comprises a control unit according to any of the aforementioned examples. The heavy-duty vehicle comprises a first and a second tire explosion detection system, where the first tire explosion detection system has a lower response time than the second system. The heavy-duty vehicle comprises a plurality of vehicle sensors for measuring sensor data of the first and the second tire explosion detection systems, wherein the plurality of vehicle sensors are connected to the control unit via a vehicle interface. The second aspect of the disclosure may seek to mitigate problems associated with tire explosion detection systems of heavy-duty vehicles such as their lack of robustness and delayed response times. A technical benefit may include early detection and response to tire explosions, which improves safety margins and enables timely intervention for ensuring vehicle stability and control.

Optionally in some examples, including in at least one preferred example, the plurality of vehicle sensors comprises a pressure switch for detecting of a pressure drop, wheel speed sensors for measuring individual front wheel speeds and at least one of an IMU, an RTK receiver, a camera, a lidar sensor and a radar sensor for measuring lateral motion. A technical benefit of using these sensors may include near-instantaneous detection of a tire pressure drop by the first tire explosion system and enhanced reliability in confirming the tire explosion by the second tire explosion system.

According to a third aspect of the invention, a method in a heavy-duty vehicle for early detection and response to a tire explosion is disclosed. The method comprises providing a first and a second tire explosion detection system, where the first system has a lower response time than the second system. The method further comprises detecting a tire explosion by the first system, and in response to detecting the tire explosion, preparing the vehicle for a safety maneuver. The method further comprises confirming the tire explosion by detecting the tire explosion by the second system, and in response to confirming the tire explosion, executing the safety maneuver. The first aspect of the disclosure may seek to mitigate problems associated with tire explosion detection systems such as their lack of robustness and delayed response times. A technical benefit may include early detection and response to tire explosions, which improves safety margins and enables timely intervention for ensuring vehicle stability and control.

Optionally in some examples, including in at least one preferred example, the first tire explosion detection system comprises a pressure switch for detection of a pressure drop and detecting the tire explosion by the first system comprises assessing the pressure drop. A technical benefit of using a pressure switch may include near-instantaneous detection of a tire pressure drop by the first tire explosion system, which facilitates preparation for the safety maneuver.

Optionally in some examples, including in at least one preferred example, the second tire explosion detection system comprises individual wheel speed sensors for measuring individual front wheel speeds ($\omega_{11}$, $\omega_{12}$) and detecting the tire explosion by the second system comprises assessing individual front wheel speeds ($\omega_{11}$, $\omega_{12}$). A technical benefit of using individual wheel speed sensors may include enhanced reliability in confirming the tire explosion by the second tire explosion system.

Optionally in some examples, including in at least one preferred example, the second tire explosion detection system comprises at least one of an IMU, an RTK receiver, a camera, a lidar sensor and a radar sensor for measuring lateral motion and detecting the tire explosion by the second system comprises assessing the lateral motion. A technical benefit of using an IMU, alone or in combination with the individual wheel speed sensors, may include enhanced reliability in confirming the tire explosion by the second tire explosion system.

Optionally in some examples, including in at least one preferred example, preparing the vehicle for a safety maneuver comprises switching to a fault tolerant VMM mode where any malfunctioning wheel is isolated and control commands are directed solely to the functional wheels. A technical benefit of switching to a fault tolerant VMM mode may include avoiding sending control commands to a malfunctioning wheel that may further impair stability and control of the vehicle.

Optionally in some examples, including in at least one preferred example, preparing the vehicle for a safety maneuver comprises pressurizing the brake system to achieve pretension, thereby ensuring readiness for immediate brake engagement upon activation. A technical benefit of pressurizing the brake system to achieve pretension may include enabling immediate brake engagement upon the second system confirming the tire explosion.

Optionally in some examples, including in at least one preferred example, preparing the vehicle for a safety maneuver comprises allowing the steering system to apply higher steering torque to be used for controlling the steering angle. A technical benefit of allowing the steering system to apply higher steering torque may include improved handling of unexpected lateral motion, thereby reducing the risk of lane deviation after a tire explosion.

Optionally in some examples, including in at least one preferred example, executing the safety maneuver comprises immediate activation of the brake system. A technical benefit of immediate activation of the brake system may include the reduction of the vehicle's speed to a level that ensures stability and control.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

BRIEF DESCRIPTION OF THE DRAWINGS

Examples are described in more detail below with reference to the appended drawings.

FIG. 1 is an exemplary system diagram of a heavy-duty vehicle where tire explosion techniques can be applied with advantage.
FIG. 2 shows an example of motion support device control systems in a heavy-duty vehicle.
FIG. 3 shows an example of a three-wheel vehicle model.
FIG. 4 is a flow chart of an exemplary method for detecting a tire explosion in a heavy-duty vehicle according to an example.
FIG. 5A schematically illustrates a control unit.
FIG. 5B shows an example of a computer program product.
FIG. 6 is a schematic diagram of an exemplary computer system for implementing examples disclosed herein, according to an example.

DETAILED DESCRIPTION

The detailed description set forth below provides information and examples of the disclosed technology with sufficient detail to enable those skilled in the art to practice the disclosure.

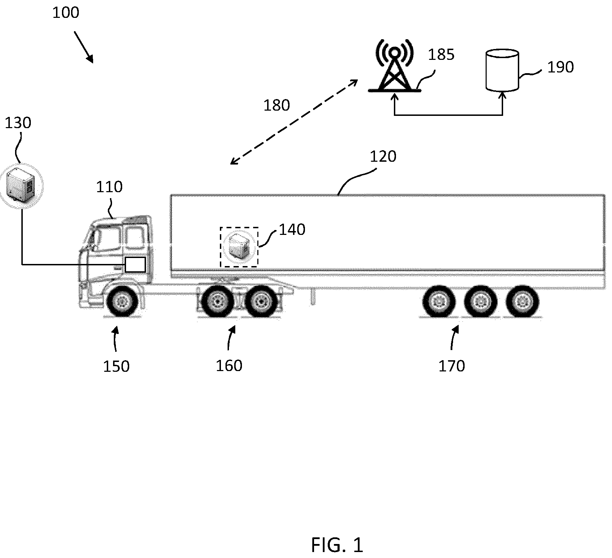

FIG. 1 illustrates an example vehicle 100 for cargo transport where the herein disclosed techniques can be applied with advantage. The vehicle 100 comprises a tractor or towing vehicle 110 supported on front wheels 150 and rear wheels 160, at least some of which are driven wheels. The tractor 110 is configured to tow a first trailer unit 120 supported on trailer wheels 170 by a fifth wheel connection in a known manner. The trailer wheels are normally braked wheels but may also comprise driven wheels on one or more axles.

The teachings herein are particularly suitable for heavy-duty vehicles such as trucks, buses, coaches, and heavy construction equipment. A heavy-duty vehicle can be defined as a freight vehicle of more than 3.5 metric tonnes (trucks) or passenger transport vehicles of more than 8 seats (buses and coaches).

The tractor 110 comprises a vehicle unit computer (VUC) 130 for controlling various kinds of functionality, among other things, to achieve propulsion, braking, and steering. Some trailer units 120 also comprise a VUC 140 for controlling various functions of the trailer, such as braking of trailer wheels, and sometimes also trailer wheel propulsion. The VUCs 130, 140 may be centralized or distributed over several processing circuits. Parts of the vehicle control functions may also be executed remotely, e.g., on a remote server 190 connected to the vehicle 100 via wireless link 180 and a wireless access network 185.

The VUC 130 on the tractor 110 (and possibly also the VUC 140 on the trailer 120) may be configured to execute vehicle control methods which are organized according to a layered functional architecture where some functionality may be comprised in a traffic situation management (TSM) domain in a higher layer and some other functionality may be comprised in a vehicle motion management (VMM) domain residing in a lower functional layer. The TSM plans driving operation with a time horizon of, e.g., 10 seconds. This time frame corresponds to, e.g., the time it takes for the vehicle 100 to negotiate a curve. The vehicle maneuvers planned and executed by the TSM can be associated with acceleration profiles and curvature profiles. The TSM continuously requests the desired acceleration profiles and curvature profiles from the VMM function which performs force allocation to meet the requests from the TSM in a safe and robust manner.

The VMM operates with a time horizon of about 1 second or so, and continuously transforms the acceleration profiles and curvature profiles into control commands for controlling vehicle motion functions, actuated by the different motion support devices (MSDs) of the vehicle. If the vehicle is in motion, the VMM performs motion estimation, i.e., determines positions, speeds, accelerations, articulation angles of the different units in the vehicle combination by monitoring operations using various sensors arranged on the vehicle, often in connection to the MSDs. For instance, by determining vehicle unit motion using, e.g., global positioning systems, radar sensors and/or lidar sensors, and translating this vehicle unit motion into a local coordinate system of a given wheel, it becomes possible to accurately estimate wheel slip by comparing the vehicle unit motion in the wheel reference coordinate system to data obtained from a wheel speed sensor arranged in connection to the wheel. A tire model can be used to translate between desired tire force and wheel slip.

The VMM furthermore manages force generation and coordination, i.e., it determines what forces that are required in order to fulfil the requests from the TSM, for instance to accelerate the vehicle according to a requested acceleration profile requested by TSM and/or to generate a certain curvature motion by the vehicle also requested by TSM. The forces may comprise e.g., longitudinal forces and lateral forces, as well as different types of torques.

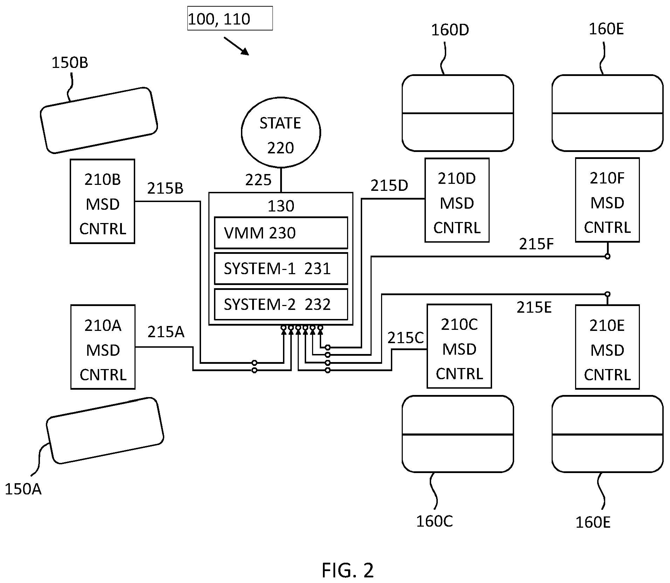

FIG. 2 schematically illustrates a vehicle 100, 110 with a VUC 130. The VUC 130, and potentially also the VUC 140 on the trailer, are control units 130, 140 that manage vehicle motion and control of the heavy-duty vehicle 100 with functionalities spanning both TSM 232 and VMM 231 domains. The VUC 130 comprises a VMM unit 230, a first tire explosion detection system 231, and a second tire explosion detection system 232. The VUC 130 is arranged to control a plurality of MSD control units 210A, 210B, 210C, 210D, 210E, 210F through a connection interface 215B, 215B, 215C, 215D, 215E, 215F. Each MSD control unit is arranged to control a respective wheel 150A, 150B, 160C, 160D, 160E, 160F.

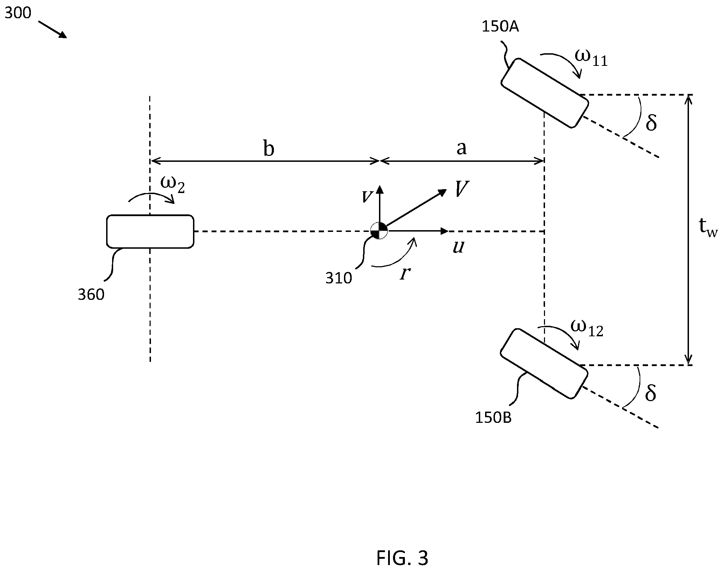

FIG. 3 schematically illustrates a three-wheel vehicle model 300 and some of its key parameters. The three-wheel model comprises two individual front wheels 150A, 150B on a front axle, and a rear wheel 360 on a rear axle. The first front wheel 150A has a first front wheel speed $\omega_{11}$, and the second front wheel 150B has a second front wheel speed $\omega_{12}$. The two front wheels 150A, 150B are separated by a track width $t_w$. The front wheels 150A, 150B are steerable, where the angle between longitudinal direction of the vehicle and the two front wheels 150A, 150B is given by a road-wheel angle $\delta$. The front axle and the center of gravity 310 are separated by a distance a, and the rear axle and the center of gravity 310 are separated by a distance b. Hence, the distance between the front and the rear axles are a+b. The vehicle has a velocity V, comprising a longitudinal velocity u and a lateral velocity v. The yaw rate r denotes the rotational speed around the vehicle's vertical axis. Typically, the vertical axis of the vehicle passes through the center of gravity 310.

In the subsequent paragraphs, referring to FIGS. 1-3, a first aspect relating to a control unit 130, 140 for early detection and response to a tire explosion in a vehicle 100 is described, covering both heavy-duty vehicles (e.g., trucks, buses, or construction equipment) and smaller passenger vehicles (e.g., passenger cars with five or fewer seats).

The control unit 130, 140 is configured to obtain, through a vehicle interface 225, sensor data of a first and a second tire explosion detection system 231, 232, where the first tire explosion detection system 231 has a lower response time than the second system 232.

The control unit 130, 140 is configured to detect a tire explosion from the sensor data of the first system, and in response to detecting the tire explosion, prepare the vehicle for a safety maneuver. Typically, the first detection system 231 achieves near-instantaneous detection of a tire explosion by using a micro switch or a similar device, which offers a measurement update within the range of microseconds. In some examples, the first tire explosion detection system 231 comprises a pressure switch for detection of a pressure drop $\Delta p$ and detecting the tire explosion by the first system comprises assessing the pressure drop $\Delta p$. Detection of the pressure drop may involve identifying a tire pressure below a threshold, where the threshold indicates a tire pressure level suggestive of a tire explosion. A technical benefit of using a pressure switch, or a similar device, may include near-instantaneous detection of a tire pressure drop by the first tire explosion system, which facilitates preparation for the safety maneuver.

In response to detecting the tire explosion by the first tire explosion detection system 231, the control unit 130, 140 is configured to prepare the vehicle for a safety maneuver. In preparing the vehicle for the safety maneuver, the control unit 130, 140 may be configured to switch to a fault tolerant vehicle motion management (VMM) mode where any malfunctioning wheel is isolated and control commands are directed solely to functional wheels. In this mode, the control unit 130, 140 adjusts the control commands sent to the operational wheels to compensate for the isolated, non-functional wheel. For instance, the applied brake torque and steering inputs may be adjusted to compensate for the isolated wheel. A fault tolerant VMM mode may have the advantage that the functioning wheels may compensate for the malfunctioning wheel, thereby improving stability and control of the vehicle. In preparing the vehicle for the safety maneuver, the control unit 130, 140 may be configured to prepare the vehicle for a safety maneuver by pressurizing the brake system to achieve pretension. Pressurizing the brake system to achieve pretension may have the advantage that immediate brake engagement with minimal delay is possible upon activation of the brake system. In preparing the vehicle for the safety maneuver, the control unit 130, 140 may allow the steering system to apply higher steering torque to be used for controlling the steering angle. A tire explosion may generate sudden lateral forces, causing the vehicle 100 to move unexpectedly to the side. In such scenarios, increased steering torques can assist in counteracting lateral movement and maintaining vehicle control. Allowing the steering system to apply higher steering torque may thus have the advantage that maneuverability is improved, thereby effectively avoiding lane deviation after a tire explosion.

The control unit 130, 140 is further configured to confirm the tire explosion by detecting the tire explosion from the sensor data of the second tire explosion detection system 232, and in response to confirming the tire explosion, execute the safety maneuver. As stated above, the second tire explosion detection system 232 has a longer response time compared to the first system. The extended response time may allow for improved detection reliability, ensuring a more precise identification of actual tire explosions. The second tire explosion detection system 232 may be any tire explosion detection system with a response time sufficiently brief to allow the control unit 130, 140 to execute the safety maneuver. The key consideration is that the response time of the second system is sufficiently brief to maintain vehicle control, which may vary depending on several vehicle parameters. In some examples, the response time is less than 150 milliseconds, which supports continued control under a wide range of operational conditions for most types of heavy-duty vehicles.

In some examples, the second tire explosion detection system 232 comprises individual wheel speed sensors for measuring individual front wheel speeds $\omega_{11}$, $\omega_{12}$, where the first front wheel has a wheel speeds $\omega_{11}$ and the second front wheel has a wheel speed $\omega_{12}$. The measured individual front wheel speeds $\omega_{11}$, $\omega_{12}$ are comprised in the sensor data and detecting the tire explosion by the second system comprises assessing the measured individual front wheel speeds $\omega_{11}$, $\omega_{12}$.

Assessing the individual front wheel speeds may include the control unit 130, 140 being configured to calculate a wheel speed discrepancy $\Delta\omega = \omega_{11} - \omega_{12}$ between the first front wheel speed $\omega_{11}$ and the second front wheel speed $\omega_{12}$, and identify a tire explosion if the magnitude of the wheel speed discrepancy $|\Delta\omega|$ exceeds a threshold, wherein the threshold can be established through computer simulations of the vehicle or practical experimentation, such as test driving on a test track. Similarly, assessing the individual front wheel speeds may include the control unit 130, 140 being configured to calculate a wheel speed discrepancy $\Delta\omega$ between the first front wheel speed $\omega_{11}$ and the second front wheel speed $\omega_{12}$, determine an adjusted wheel speed discrepancy $\Delta\omega_a$ based on the steering angle $\delta$, and identify a tire explosion if the magnitude of the adjusted wheel speed discrepancy $|\Delta\omega_a|$ exceeds a predefined threshold, wherein the predefined threshold can be established through computer simulations of the vehicle or practical experimentation, such as test driving on a test track.

Alternatively, the control unit 130, 140 may be configured to integrate a vehicle model for vehicle dynamic state estimation. The vehicle model is a mathematical representation of the vehicle's motion parameters, allowing the control unit to predict expected vehicle states based on current vehicle states and various vehicle parameters. For example, the vehicle model may be any vehicle model that enables the control unit 130, 140 to determine expected individual front wheel speeds $\hat{\omega}_{11}$, $\hat{\omega}_{12}$ based applied front wheel torques $T_{11}$, $T_{12}$ and road-to-wheel angle $\delta$. Assessing the individual front wheel speeds $\omega_{11}$, $\omega_{12}$ may then comprise the control unit 130, 140 being configured to determine expected and measured individual front wheel speeds $\hat{\omega}_{11}$, $\hat{\omega}_{12}$, $\omega_{11}$, $\omega_{12}$, and identify a tire explosion if the magnitude of the discrepancy between the expected first front wheel speed and the measured first front wheel speed, i.e., $|\hat{\omega}_{11} - \omega_{11}|$, exceeds a first predetermined wheel speed threshold, or if the magnitude of the discrepancy between the expected second front wheel speed and the second measured front wheel speed, i.e., $|\hat{\omega}_{12} - \omega_{12}|$, exceeds a second predetermined wheel speed threshold, wherein the first and the second predefined wheel speed thresholds can be established through computer simulations of the vehicle or practical experimentation, such as test driving on a test track.

A technical benefit of using individual wheel speed sensors may include enhanced reliability in confirming the tire explosion by the second tire explosion system.

In some examples, the second tire explosion detection system 232 comprises an inertial measurement unit (IMU) for measuring lateral motion. Additionally, a real-time kinematic (RTK) receiver, a camera, a lidar sensor and a radar sensor may be used for measuring lateral motion. The measured lateral motion comprises at least one of measured lateral velocity v, measured lateral acceleration $a_y$, and measured yaw rate r. The measured lateral motion is comprised in the sensor data and detecting the tire explosion by the second system comprises assessing the measured lateral motion.

The control unit 130, 140 may be configured to integrate a vehicle model for vehicle dynamic state estimation. For example, the vehicle model may be any vehicle model that enables the control unit 130, 140 to determine expected lateral motion, i.e., any of expected lateral velocity $\hat{v}$, expected lateral acceleration $\hat{a}_y$, and expected yaw rate $\hat{r}$, based on the applied front wheel torques $T_{11}$, $T_{12}$ and road-to-wheel angle $\delta$. Assessing the measured lateral motion may then comprise the control unit 130, 140 being configured to determine expected and measured lateral motion and identify a tire explosion if the magnitude of the discrepancy between the expected and measured lateral motion, i.e., any of $|\hat{v} - v|$, $|\hat{a}_y - a_y|$, and $|\hat{r} - r|$, exceeds a predetermined lateral motion threshold, wherein the predetermined lateral motion threshold can be established through computer simulations of the vehicle or practical experimentation, such as test driving on a test track.

In some examples, the second tire explosion detection system 232 comprises individual wheel speed sensors for measuring individual front wheel speeds $\omega_{11}$, $\omega_{12}$ in combination with an inertial measurement unit (IMU) for measuring lateral motion. Additionally, a real-time kinematic (RTK) receiver, a camera, a lidar sensor and a radar sensor may be used for measuring lateral motion. Detecting the tire explosion by the second system may then comprise assessing both the individual front wheel speeds and the lateral motion.

A technical benefit of using an IMU, alone or in combination with the individual wheel speed sensors, may include enhanced reliability in confirming the tire explosion by the second tire explosion system.

In some examples, executing the safety maneuver comprises immediate activation of the brake system. This has the advantage of quickly reducing the speed of the vehicle to a level that ensures stability and control. In some examples, executing the safety maneuver comprises allowing the steering system to apply higher steering torque to be used for controlling the steering angle. This has the advantage of improving maneuverability to avoid lane deviation after a tire explosion.

The first aspect of the disclosure may seek to mitigate problems associated with tire explosion detection systems such as their lack of robustness and delayed response times. A technical benefit may include early detection and response to tire explosions, which improves safety margins and enables timely intervention for ensuring vehicle stability and control.

In the subsequent paragraphs, referring to FIGS. 1-3, a second aspect relating to a heavy-duty vehicle is disclosed. The heavy-duty vehicle comprises a control unit according to any of the herein described examples. The heavy-duty vehicle further comprises a first and a second tire explosion detection system 231, 232, where the first tire explosion detection system 231 has a lower response time than the second system, according to any of the herein described examples. The plurality of vehicle sensors 220 for measuring sensor data of the first and the second tire explosion detection system 231, 232, wherein the plurality of vehicle sensors 220 are connected to the control unit 130, 140 via a vehicle interface 225. The second aspect of the disclosure may seek to mitigate problems associated with tire explosion detection systems of heavy-duty vehicles such as their lack of robustness and delayed response times. A technical benefit may include early detection and response to tire explosion, which improves safety margins and enables timely intervention for ensuring vehicle stability and control.

In some examples, the plurality of vehicle sensors 220 may comprise a pressure switch for detecting of a pressure drop $\Delta p$. In some examples, the plurality of vehicle sensors 220 may wheel speed sensors for measuring individual front wheel speeds $\omega_{11}$, $\omega_{12}$. Wheel speed sensors may employ magnetic or optical sensing to continuously monitor the rotation of each wheel, thereby providing measurements of individual wheel speeds. In some examples, the plurality of vehicle sensors 220 may comprise an inertial measurement unit (IMU) for measuring yaw rate r and lateral acceleration $a_y$. The IMU comprises an accelerometer and and a gyroscope to accurately determine the vehicle's movement dynamics, which may include orientation, velocity, and acceleration. A technical benefit of using a pressure switch may include near-instantaneous detection of a tire pressure drop by the first tire explosion system, and a technical benefit of using an IMU and wheel speed sensors may include enhanced reliability in confirming the tire explosion by the second tire explosion system.

In some examples, the plurality of vehicle sensors 220 may comprise at least one of an IMU, a real-time kinematic, RTK, receiver, a camera, a lidar sensor and a radar sensor for measuring lateral velocity v and/or lateral acceleration $a_y$. The IMU may contribute to the measuring by providing acceleration and angular velocity, which may be used to determine the vehicle's lateral velocity and/or acceleration. The RTK receiver provides high-precision satellite navigation capabilities that may contribute to the measurement of lateral velocity and/or acceleration. The camera may contribute to the measurement of lateral velocity and/or acceleration by processing real-time images to track the movement and speed of nearby objects and terrain. The lidar sensor uses light detection and ranging to determine distances to surrounding objects, aiding in the measurement of lateral velocity. The radar sensor employs radio waves to detect the speed and position of objects around the vehicle, contributing to the measurement of lateral velocity and/or acceleration. A technical benefit of using an IMU, an RTK receiver, a camera, a lidar sensor and/or a radar sensor for measuring lateral velocity may be that these sensors reflect one or more states represented in the vehicle model, thus allowing for a more accurate reflection of the vehicle's motion. The vehicle sensors 220 for measuring for measuring lateral velocity v may typically also be used for measuring longitudinal velocity u.

In the subsequent paragraphs, referring to FIGS. 1-4, a third aspect relating to a method in a vehicle 100 for early detection and response to a tire explosion is described, covering both heavy-duty vehicles (e.g., trucks, buses, or construction equipment) and smaller passenger vehicles (e.g., passenger cars with five or fewer seats).

The method is comprising providing S1 a first and a second tire explosion detection system 232, where the first system has a lower response time than the second system.

The method is further comprising detecting S2 a tire explosion by the first system, and in response to detecting the tire explosion, preparing S3 the vehicle for a safety maneuver. Typically, the first detection system 231 achieves near-instantaneous detection of a tire explosion by using a micro switch or a similar device, which offers a measurement update within the range of microseconds. In some examples, the first tire explosion detection system 231 comprises a pressure switch for detection of a pressure drop $\Delta p$ and detecting the tire explosion by the first system comprises assessing the pressure drop $\Delta p$. Detection of the pressure drop may involve identifying a tire pressure below a threshold, where the threshold indicates a tire pressure level suggestive of a tire explosion. A technical benefit of using a pressure switch, or a similar device, may include near-instantaneous detection of a tire pressure drop by the first tire explosion system, which facilitates preparation for the safety maneuver.

In some examples, preparing S3 the vehicle for a safety maneuver comprises switching to a fault tolerant vehicle motion management (VMM) mode where any malfunctioning wheel is isolated and control commands are directed solely to functional wheels. In a fault tolerant mode, the VMM adjusts the control commands sent to the operational wheels to compensate for the isolated, non-functional wheel. For instance, the applied brake torque and steering inputs may be adjusted to compensate for the isolated wheel. A fault tolerant VMM mode may have the advantage that the functioning wheels may compensate for the malfunctioning wheel, thereby improving stability and control of the vehicle. In some examples, preparing S3 the vehicle for the safety maneuver comprises pressurizing the brake system to achieve pretension. Pressurizing the brake system to achieve pretension may have the advantage that immediate brake engagement with minimal delay is possible upon activation of the brake system. In some exampless, prepareing S3 the vehicle for the safety maneuver comprises allowing the steering system to apply higher steering torque to be used for controlling the steering angle. A tire explosion may generate sudden lateral forces, causing the vehicle 100 to move unexpectedly to the side. In such scenarios, increased steering torques can assist in counteracting lateral movement and maintaining vehicle control. Allowing the steering system to apply higher steering torque may thus have the advantage that maneuverability is improved, thereby effectively avoiding lane deviation after a tire explosion.

The method further comprises confirming S4 the tire explosion by detecting the tire explosion by the second tire explosion detection system 232, and in response to confirming the tire explosion, executing S5 the safety maneuver. As described earlier, the second tire explosion detection system 232 has a longer response time compared to the the first system. The extended response time may allow for improved detection reliability, ensuring a more precise identification of actual tire explosions. The second tire explosion detection system 232 may be any tire explosion detection system with a response time sufficiently brief to allow executing S5 the safety maneuver before the vehicle experiences any significant loss of stability or control. The key consideration is that the response time of the second system is sufficiently brief to maintain vehicle control, which may vary depending on several vehicle parameters. In some examples, the response time is less than 150 milliseconds, which supports continued control under a wide range of operational conditions for most types of heavy-duty vehicles.

In some examples, the second tire explosion detection system 232 comprises individual wheel speed sensors for measuring individual front wheel speeds $\omega_{11}, \omega_{12}$, where the first front wheel has a wheel speeds $\omega_{11}$ and the second front wheel has a wheel speed $\omega_{12}$, and confirming S4 the tire explosion by detecting the tire explosion by the second system comprises assessing the measured individual front wheel speeds $\omega_{11}, \omega_{12}$.

Assessing the individual front wheel speeds may comprise calculating a measured wheel speed discrepancy $\Delta\omega = \omega_{11} - \omega_{12}$ between the measured first front wheel speed $\omega_{11}$ and the measured second front wheel speed $\omega_{12}$, and identify a tire explosion if the magnitude of the wheel speed discrepancy $|\Delta\omega|$ exceeds a threshold, wherein the threshold can be established through computer simulations of the vehicle or practical experimentation, such as test driving on a test track. Similarly, assessing the individual front wheel speeds may comprise calculating a wheel speed discrepancy $\Delta\omega$ between the first front wheel speed $\omega_{11}$ and the second front wheel speed $\omega_{12}$, determining an adjusted wheel speed discrepancy $\Delta\omega_a$ based on the steering angle $\delta$, and identify a tire explosion if the magnitude of the adjusted wheel speed discrepancy $|\Delta\omega_a|$ exceeds a predefined threshold, wherein the predefined threshold can be established through computer simulations of the vehicle or practical experimentation, such as test driving on a test track.

Alternatively, the method may employ a vehicle model for vehicle dynamic state estimation. The vehicle model is a mathematical representation of the vehicle's motion parameters, allowing prediction of expected vehicle states. For example, the vehicle model may be any vehicle model that enables predicting expected individual front wheel speeds $\hat{\omega}_{11}, \hat{\omega}_{12}$ based on applied front wheel torques and road-to-wheel angle. Assessing the individual front wheel speeds $\omega_{11}, \omega_{12}$ may then comprise determining expected and measured individual front wheel speeds $\hat{\omega}_{11}, \hat{\omega}_{12}, \omega_{11}, \omega_{12}$, and identifying a tire explosion if the magnitude of the discrepancy between the expected first front wheel speed and the measured first front wheel speed, i.e., $|\hat{\omega}_{11} - \omega_{11}|$, exceeds a first predetermined threshold, or if the magnitude of the discrepancy between the expected second front wheel speed and the second measured front wheel speed, i.e., $|\hat{\omega}_{12} - \omega_{12}|$, exceeds a second predetermined threshold, wherein the first and the second predefined thresholds can be established through computer simulations of the vehicle or practical experimentation, such as test driving on a test track.

A technical benefit of using individual wheel speed sensors may include enhanced reliability in confirming the tire explosion by the second tire explosion system.

In another example, the second tire explosion detection system 232 comprises an inertial measurement unit (IMU) for measuring lateral motion, wherein the measured lateral motion comprises at least one of a measured lateral velocity v, a measured lateral acceleration $a_y$, and a measured yaw rate r. Detecting the tire explosion by the second system comprises assessing the measured lateral motion.

The method may employ a vehicle model for vehicle dynamic state estimation. For example, the vehicle model may be any vehicle model that enables predicting the expected lateral motion, i.e., any of an expected lateral velocity $\hat{v}$, an expected lateral acceleration $\hat{a}_y$, and an expected yaw rate $\hat{r}$, based on the applied front wheel torques $T_{11}, T_{12}$ and road-to-wheel angle $\delta$. Assessing the measured lateral motion may then comprise determining expected and measured lateral motion and identifying a tire explosion if the magnitude of the discrepancy between the expected and measured lateral motion, i.e., any of $|\hat{v} - v|$, $|\hat{a}_y - a_y|$, and $|\hat{r} - r|$, exceeds a predetermined lateral motion threshold, wherein the predetermined lateral motion threshold can be established through computer simulations of the vehicle or practical experimentation, such as test driving on a test track.

In some examples, the second tire explosion detection system 232 comprises individual wheel speed sensors for measuring individual front wheel speeds $\omega_{11}$, $\omega_{12}$ in combination with at least one of an IMU, an RTK receiver, a camera, a lidar sensor and a radar sensor for measuring lateral motion. Additionally, an RTK receiver, a camera, a lidar sensor and a radar sensor may be used for measuring lateral motion. Detecting the tire explosion by the second system may then comprise assessing both the individual front wheel speeds and the lateral motion.

A technical benefit of using an IMU, alone or in combination with the individual wheel speed sensors, may include enhanced reliability in confirming the tire explosion by the second tire explosion system.

In some examples, executing S5 the safety maneuver comprises immediate activation of the brake system. Immediate activation of the brake system has the advantage of quickly reducing the speed of vehicle to a level that ensures stability and control. In some examples, executing S5 the safety maneuver comprises allowing the steering system to apply higher steering torque to be used for controlling the steering angle. Applying higher steering torque has the advantage of improving maneuverability to avoid lane deviation after a tire explosion.

The first aspect of the disclosure may seek to mitigate problems associated with tire explosion detection systems such as their lack of robustness and delayed response times. A technical benefit may include early detection and response to tire explosion, which improves safety margins and enables timely intervention for ensuring vehicle stability and control.

In subsequent paragraphs, other aspects relating to the control unit, the vehicle and the method are provided.

In some examples, the vehicle model may be a three-wheel model as illustrated in FIG. 3 and described by the discrete dynamical system:

$$v_{k+1} = v_k - \frac{h}{m}\left(mu_k r_k + \frac{C_c}{r_r}\left((v_k + ar_k)\left(\frac{F_{z_{k11}}}{\omega_{k11}} + \frac{F_{z_{k12}}}{\omega_{k12}}\right)\right) - C_c \sin\delta_k\left(F_{z_{k11}} + F_{z_{k12}}\right) + C_2\left(\frac{v_k - br_k}{u_k}\right)\right),$$

$$r_{k+1} = r_k - \frac{h}{I}\left(\frac{C_c}{r_r}\left(\left(a(v_k + ar_k) + \frac{t_w^2}{4}r_k\right)\left(\frac{F_{z_{k11}}}{\omega_{k11}} + \frac{F_{z_{k12}}}{\omega_{k12}}\right) - \frac{t_w}{2}u_k\left(\frac{F_{z_{k11}}}{\omega_{k11}} - \frac{F_{z_{k12}}}{\omega_{k12}}\right)\right) - C_c\left(a\sin\delta_k\left(F_{z_{k11}} + \right.\right.$$

$$\left.\left. F_{z_{k12}}\right) - \frac{t_w}{2}\cos\delta_k\left(F_{z_{k11}} - F_{z_{k12}}\right)\right) - C_2 b\left(\frac{v_k - br_k}{u_k}\right)\right),$$

$$\omega_{k+1_{11}} = \omega_{k11} - \frac{h}{J_{11}}\left(-T_{k_{11}} + r_{b_1}C_{\kappa_{11}}\left(1 - \frac{\left(u_k - \frac{t_w}{2}r_k\right)\cos\delta_k + (v_k + ar_k)\sin\delta_k}{r_{r_1}\omega_{k11}}\right)\right),$$

$$\omega_{k+1_{12}} = \omega_{k12} - \frac{h}{J_{12}}\left(-T_{k_{12}} + r_{b_2}C_{\kappa_{12}}\left(1 - \frac{\left(u_k + \frac{t_w}{2}r_k\right)\cos\delta_k + (v_k + ar_k)\sin\delta_k}{r_{r_2}\omega_{k12}}\right)\right).$$

Here, index $k$ represents a specific moment in time, while index $k + 1$ represents the subsequent moment. These two time instants are separated by a duration $h$. Vehicle mass is denoted $m$, longitudinal and lateral slip coefficient is denoted $C_c$, effective rolling radius is denoted $r_r$, normal load at the first front wheel 150A is denoted $F_{zk11}$, normal load at the second front wheel 150B is denoted $Fz_{k12}$, lateral slip stiffness at rear axle $C_2$, the mass moment of inertia of the vehicle around the vertical axis, passing through the CoG, is denoted $I$, and the mass moment of inertia of the front left and front right wheels around rotational axis of the wheel, passing through the center of the wheel, are denoted $J_{11}$ and $J_{12}$, respectively.

In some examples, the system may be represented as a state machine. It has an initial state called "state 0: idle" which is active before an explosion occurs. If the first detector, which is a hardware switch inside the tire sensitive to rapid pressure drops, detects a tire blowout, the state is changed to "state 1: pre-control". At the this stage the translational and rotational speed of the vehicle has not yet changed because the sensor is very fast. The pre-control means that the actuation can be prepared, and the effects of delay and dynamics can be eliminated or reduced. At least one of the following may now take place: 1) there will be switch to a fault tolerant allocation strategy where the faulty wheel is isolated and actuator request will be directed to the functional wheel, 2) brake is pressurized to pretension the brake system, and 3) the steering system will allow for higher steering torque to be used for controlling the steering angle. The function is waiting for an acknowledgement from a second detector. If the acknowledgement doesn't come within a predetermined time of approximately 150 ms, the control is withdrawn and the state is transitioned to "state 0: idle". If the acknowledgement is true within the time threshold, the state is changed to "state 2: control". The control action is done with a priori information about the vehicle having an exploded wheel. Steering is controlled to keep the lane. When control of the vehicle is recovered or secured, the state is transitioned to "state 3: post-control". At this stage, the control task is now to control the vehicle to a safe state. Here it means that focus is put on deceleration of the vehicle and put it into a full stop at a safe place. The post control state will be entered when the initial control is done, i.e., when the path deviation has converged to a sufficiently small value.

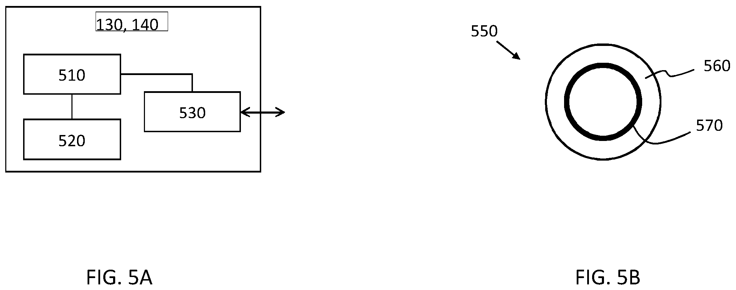

FIG. 5A schematically illustrates, in terms of a number of functional units, the components of a control unit 500 according to aspects of the discussions and methods disclosed herein. This control unit 500 may be comprised in the vehicle 100, e.g., in the form of a vehicle motion management (VMM) function unit configured to perform force allocation and the like. Processing circuitry 510 is provided using any combination of one or more of a suitable central processing unit CPU, multiprocessor, microcontroller, digital signal processor DSP, etc., capable of executing software instructions stored in a computer program product, e.g., in the form of a storage medium 530. The processing circuitry 510 may further be provided as at least one application specific integrated circuit ASIC, or field programmable gate array FPGA.

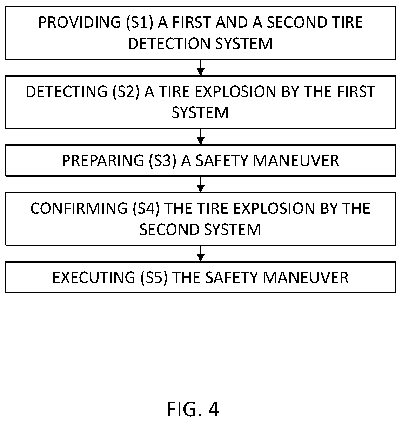

Particularly, the processing circuitry 510 is configured to cause the control unit 500 to perform a set of operations, or steps, such as the methods discussed in connection to FIG. 4. For example, the storage medium 530 may store the set of operations, and the processing circuitry 510 may be configured to retrieve the set of operations from the storage medium 530 to cause the control unit 500 to perform the set of operations. The set of operations may be provided as a set of executable instructions. Thus, the processing circuitry 510 is thereby arranged to execute methods as herein disclosed.

The storage medium 530 may also comprise persistent storage, which, for example, can be any single one or combination of magnetic memory, optical memory, solid state memory or even remotely mounted memory.

The control unit 500 may further comprise an interface 530 for communications with at least one external device, such as an electric machine or a gearbox. As such the interface 530 may comprise one or more transmitters and receivers, comprising analogue and digital components and a suitable number of ports for wireline or wireless communication.

The processing circuitry 510 controls the general operation of the control unit 470, e.g., by sending data and control signals to the interface 520 and the storage medium 830, by receiving data and reports from the interface 520, and by retrieving data and instructions from the storage medium 530. Other components, as well as the related functionality, of the control node are omitted in order not to obscure the concepts presented herein.

FIG. 5B illustrates a computer readable medium 560 carrying a computer program comprising program code means 570 for performing, e.g., the methods illustrated in FIG. 4, when said program product is run on a computer. The computer readable medium and the code means may together form a computer program product 550.

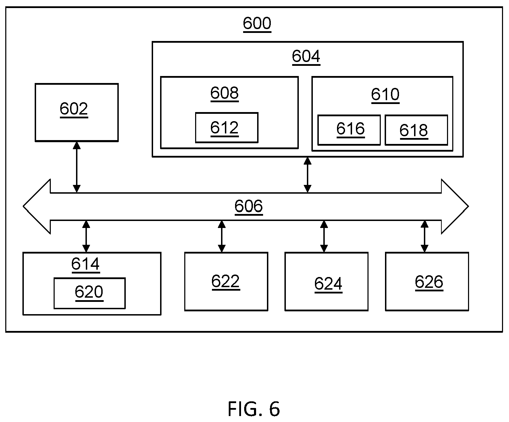

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, a control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

**Claims**

1. A control unit (130, 140) for early detection and response to a tire explosion in a heavy-duty vehicle (100), wherein the control unit (130, 140) is configured to:

   obtain, through a vehicle interface (225), sensor data for a first and a second tire explosion detection system (231, 232), where the first tire explosion detection system (231) has a lower response time than the second system (232),
   detect a tire explosion from the sensor data of the first system (231), and in response to detecting the tire explosion, prepare the vehicle for a safety maneuver,
   confirm the tire explosion by detecting the tire explosion from the sensor data of the second system (232), and in response to confirming the tire explosion, execute the safety maneuver.

2. The control unit (130, 140) of claim 1, wherein the first tire explosion detection system (231) comprises a pressure switch for detection of a pressure drop ($\Delta p$) and detecting the tire explosion by the first system comprises assessing the pressure drop ($\Delta p$).

3. The control unit (130, 140) of any of claims 1-2, wherein the second tire explosion detection system (232) comprises individual wheel speed sensors for measuring individual front wheel speeds ($\omega_{11}$, $\omega_{12}$) and detecting the tire explosion by the second system comprises assessing individual front wheel speeds ($\omega_{11}$, $\omega_{12}$).

4. The control unit (130, 140) of any of claims 1-3, wherein the second tire explosion detection system (232) comprises at least one of an IMU, an RTK receiver, a camera, a lidar sensor and a radar sensor for measuring lateral motion and detecting the tire explosion by the second system comprises assessing the lateral motion.

5. The control unit (130, 140) of any of claims 1-4, wherein the control unit (130, 140) is further configured to switch to a fault tolerant vehicle motion management, VMM, mode where any malfunctioning wheel is isolated and control commands are directed solely to functional wheels.

6. The control unit (130, 140) of any of claims 1-5, wherein the control unit (130, 140) is further configured to prepare the vehicle for a safety maneuver by pressurizing the brake system to achieve pretension, thereby ensuring readiness for immediate brake engagement upon activation.

7. The control unit (130, 140) of any of claims 1-6, wherein the control unit (130, 140) is further configured to prepare the vehicle for a safety maneuver by allowing the steering system to apply higher steering torque to be used for controlling the steering angle.

8. The control unit (130, 140) of any of claims 1-7, wherein the safety maneuver comprises immediate activation of the brake system.

9. A heavy-duty vehicle (100), comprising:

   a control unit according to any of claims 1-8,
   a first and a second tire explosion detection system (231, 232), where the first tire explosion detection system (231) has a lower response time than the second system (232), and

a plurality of vehicle sensors (220) for measuring sensor data of the first and the second tire explosion detection system (231, 232), wherein the plurality of vehicle sensors (220) are connected to the control unit (130, 140) via a vehicle interface (225).

10. The heavy-duty vehicle (100) of claim 9, wherein the plurality of vehicle sensors (220) comprises a pressure switch for detecting of a pressure drop ($\Delta p$), wheel speed sensors for measuring individual front wheel speeds ($\omega_{11}$, $\omega_{12}$) and at least one of an IMU, an RTK receiver, a camera, a lidar sensor and a radar sensor for measuring lateral motion.

11. A method in heavy-duty vehicle (100) for early detection and response to a tire explosion, the method comprising:

providing (S1) a first and a second tire explosion detection system (231, 232), where the first system has a lower response time than the second system,
detecting (S2) a tire explosion by the first system (231), and in response to detecting the tire explosion, preparing (S3) the vehicle for a safety maneuver,

confirming (S4) the tire explosion by detecting the tire explosion by the second system (232), and in response to confirming the tire explosion, executing (S5) the safety maneuver.

12. The method of claim 11, wherein the first tire explosion detection system (231) comprises a pressure switch for detection of a pressure drop ($\Delta p$) and detecting the tire explosion by the first system comprises assessing the pressure drop ($\Delta p$).

13. The method of any of claims 11-12, wherein the second tire explosion detection system (232) comprises wheel speed sensors for measuring individual front wheel speeds ($\omega_{11}$, $\omega_{12}$) and detecting the tire explosion by the second system comprises assessing individual front wheel speeds ($\omega_{11}$, $\omega_{12}$).

14. The method of any of claims 11-13, wherein the second tire explosion detection system (232) comprises at least one of an IMU, an RTK receiver, a camera, a lidar sensor and a radar sensor for measuring lateral motion and detecting the tire explosion by the second system comprises assessing the lateral motion.

15. The method of any of claims 11-14, wherein preparing (S3) the vehicle for a safety maneuver comprises switching to a fault tolerant vehicle motion management, VMM, mode where any malfunctioning wheel is isolated and control commands are directed solely to the functional wheels.

16. The method of any of claims 11-15, wherein preparing (S3) the vehicle for a safety maneuver comprises pressurizing the brake system to achieve pretension, thereby ensuring readiness for immediate brake engagement upon activation.

17. The method of any of claims 11-16, wherein preparing (S3) the vehicle for a safety maneuver comprises allowing the steering system to apply higher steering torque to be used for controlling the steering angle.

18. The method of any of claims 11-17, wherein executing (S5) the safety maneuver comprises immediate activation of the brake system.

19. A computer program (550) comprising program code means for performing the steps of any of claims 1-8 when said program is run on a computer or on processing circuitry (510) of a control unit (130, 140).

20. A computer readable medium (560) carrying a computer program (570) comprising program code means for performing the steps of any of claims 1-8 when said program product is run on a computer or on processing circuitry (510) of a control unit (130, 140).

**Patentansprüche**

1. Steuereinheit (130, 140) zum frühzeitigen Erkennen und Reagieren auf eine Reifenexplosion bei einem Schwerlastfahrzeug (100), wobei die Steuereinheit (130, 140) zu Folgendem konfiguriert ist:

Erlangen, über eine Fahrzeugschnittstelle (225), von Sensordaten für ein erstes und ein zweites Reifenexplosionserkennungssystem (231, 232) zu erhalten, wobei das erste Reifenexplosionserkennungssystem (231) eine geringere Reaktionszeit als das zweite System (232) aufweist,

Erkennen, anhand der Sensordaten des ersten Systems (231), einer Reifenexplosion, und als Reaktion auf ein Erkennen der Reifenexplosion, Vorbereiten des Fahrzeugs für ein Sicherheitsmanöver,

Bestätigen der Reifenexplosion durch Erkennender Reifenexplosion anhand der Sensordaten des zweiten Systems (232) erkannt wird, und als Reaktion auf ein Bestätigen der Reifenexplosion, Ausführen des Sicherheitsmanövers.

2. Steuereinheit (130, 140) nach Anspruch 1, wobei das erste Reifenexplosionserkennungssystem (231) einen Druckschalter zum Erkennen eines Druckabfalls ($\Delta$p) umfasst, und ein Erkennen der Reifenexplosion durch das erste System ein Bewerten des Druckabfalls ($\Delta$p) umfasst.

3. Steuereinheit (130, 140) nach einem der Ansprüche 1 bis 2, wobei das zweite Reifenexplosionserkennungssystem (232) einzelne Raddrehzahlsensoren zum Messen einzelner Vorderradgeschwindigkeiten ($\omega_{11}$, $\omega_{12}$) umfasst, und ein Erkennen der Reifenexplosion durch das zweite System ein Bewerten einzelner Vorderradgeschwindigkeiten ($\omega_{11}$, $\omega_{12}$) umfasst.

4. Steuereinheit (130, 140) nach einem der Ansprüche 1 bis 3, wobei das zweite Reifenexplosionserkennungssystem (232) mindestens eines von einer IMU, einem **RTK-**Empfänger, einer Kamera, einem Lidarsensor und einem Radarsensor zum Messen einer seitlichen Bewegung umfasst, und ein Erkennen der Reifenexplosion durch das zweite System ein Bewerten der seitlichen Bewegung umfasst.

5. Steuereinheit (130, 140) nach einem der Ansprüche 1 bis 4, wobei die Steuereinheit (130, 140) ferner konfiguriert ist, um in einen fehlertoleranten Modus für Fahrzeugbewegungsmanagement, VMM, zu schalten, in dem jedes nicht funktionierende Rad isoliert ist und Steuerbefehle nur an funktionierende Räder gerichtet werden.

6. Steuereinheit (130, 140) nach einem der Ansprüche 1 bis 5, wobei die Steuereinheit (130, 140) ferner konfiguriert ist, um das Fahrzeug auf ein Sicherheitsmanöver vorzubereiten, indem sie das Bremssystem mit Druck beaufschlagt, um eine Vorspannung zu erreichen, wodurch die Bereitschaft für einen sofortigen Bremseingriff bei Aktivierung sichergestellt wird.

7. Steuereinheit (130, 140) nach einem der Ansprüche 1 bis 6, wobei die Steuereinheit (130, 140) ferner konfiguriert ist, um das Fahrzeug auf ein Sicherheitsmanöver vorzubereiten, indem sie es dem Lenksystem ermöglicht, ein höheres Lenkmoment aufzubringen, das zum Steuern des Lenkwinkels verwendet wird.

8. Steuereinheit (130, 140) nach einem der Ansprüche 1 bis 7, wobei das Sicherheitsmanöver eine sofortige Aktivierung des Bremssystems umfasst.

9. Schwerlastfahrzeug (100), umfassend:

eine Steuereinheit nach einem der Ansprüche 1 bis 8,
ein erstes und ein zweites Reifenexplosionserkennungssystem (231, 232), wobei das erste Reifenexplosionserkennungssystem (231) eine geringere Reaktionszeit als das zweite System (232), und

eine Vielzahl von Fahrzeugsensoren (220) zum Messen von Sensordaten des ersten und des zweiten Reifenexplosionserkennungssystems (231, 232) aufweist, wobei die Vielzahl von Fahrzeugsensoren (220) über eine Fahrzeugschnittstelle (225) mit der Steuereinheit (130, 140) verbunden sind.

10. Schwerlastfahrzeug (100) nach Anspruch 9, wobei die Vielzahl von Fahrzeugsensoren (220) einen Druckschalter zum Erkennen eines Druckabfalls ($\Delta$p), Raddrehzahlsensoren zum Messen einzelner Vorderradgeschwindigkeiten ($\omega_{11}$, $\omega_{12}$) und mindestens eines von einer IMU, einem RTK-Empfänger, einer Kamera, einem Lidarsensor und einem Radarsensor zum Messen einer seitlichen Bewegung umfassen.

11. Verfahren in einem Schwerlastfahrzeug (100) zum frühzeitigen Erkennen und Reagieren auf eine Reifenexplosion, das Verfahren umfassen:

Bereitstellen (S1) eines ersten und eines zweiten Reifenexplosionserkennungssystems (231, 232), wobei das erste System eine geringere Reaktionszeit aufweist als das zweite System,

Erkennen (S2) einer Reifenexplosion durch das erste System (231), und als Reaktion auf ein Erkennen der Reifenexplosion, Vorbereiten (S3) des Fahrzeugs für ein Sicherheitsmanöver,

Bestätigen (S4) der Reifenexplosion durch Erkennen der Reifenexplosion durch das zweite System (232), und als Reaktion auf ein Bestätigen der Reifenexplosion, Ausführen (S5) des Sicherheitsmanövers.

12. Verfahren nach Anspruch 11, wobei das erste Reifenexplosionserkennungssystem (231) einen Druckschalter zum Erkennen eines Druckabfalls ($\Delta$p) umfasst, und ein Erkennen der Reifenexplosion durch das erste System ein Bewerten des Druckabfalls ($\Delta$p) umfasst.

13. Verfahren nach einem der Ansprüche 11 bis 12, wobei das zweite Reifenexplosionserkennungssystem (232) einzelne Raddrehzahlsensoren zum Messen einzelner Vorderradgeschwindigkeiten ($\omega_{11}$, $\omega_{12}$) umfasst, und ein Erkennen der Reifenexplosion durch das zweite System ein Bewerten einzelner Vorderradgeschwindigkeiten ($\omega_{11}$, $\omega_{12}$) umfasst.

14. Verfahren nach einem der Ansprüche 11 bis 13, wobei das zweite Reifenexplosionserkennungssystem (232) mindestens eines von einer IMU, einem RTK-Empfänger, einer Kamera, einem Lidarsensor und einem Radarsensor zum Messen einer seitlichen Bewegung umfasst, und ein Erkennen der Reifenexplosion durch das zweite System ein Bewerten der seitlichen Bewegung umfasst.

15. Verfahren nach einem der Ansprüche 11 bis 14, wobei ein Vorbereiten (S3) des Fahrzeugs für ein Sicherheitsmanöver ein Schalten in einen fehlertoleranten Modus für Fahrzeugbewegungsmanagement, VMM, umfasst, in dem jedes nicht funktionierende Rad isoliert ist und Steuerbefehle nur an die funktionierende Räder gerichtet werden.

16. Verfahren nach einem der Ansprüche 11 bis 15, wobei ein Vorbereitung (S3) des Fahrzeugs für ein Sicherheitsmanöver ein Beaufschlagen des Bremssystems mit Druck umfasst, um eine Vorspannung zu erreichen, wodurch die Bereitschaft zum sofortigen Bremseingriff bei Aktivierung sichergestellt wird.

17. Verfahren nach einem der Ansprüche 11 bis 16, wobei ein Vorbereiten (S3) des Fahrzeugs für ein Sicherheitsmanöver darin besteht, dass dem Lenksystem ermöglicht wird, ein höheres Lenkmoment aufzubringen, das zum Steuern des Lenkwinkels verwendet wird.

18. Verfahren nach einem der Ansprüche 11 bis 17, wobei ein Ausführen (S5) des Sicherheitsmanövers eine sofortige Aktivierung des Bremssystems umfasst.

19. Computerprogramm (550), umfassend Programmcodeeinrichtungen zum Durchführen der Schritte nach einem der Ansprüche 1 bis 8, wenn das Programm auf einem Computer oder auf einer Verarbeitungsschaltung (510) einer Steuereinheit (130, 140) ausgeführt wird.

20. Computerlesbares Medium (560), das ein Computerprogramm (570) trägt, umfassend Programmcodeeinrichtungen zum Durchführen der Schritte nach einem der Ansprüche 1 bis 8, wenn das Programmprodukt auf einem Computer oder auf einer Verarbeitungsschaltung (510) einer Steuereinheit (130, 140) ausgeführt wird.

**Revendications**

1. Unité de commande (130, 140) pour la détection précoce et la réponse à une explosion de pneu dans un véhicule poids lourd (100), dans laquelle l'unité de commande (130, 140) est configurée pour :

obtenir, par l'intermédiaire d'une interface de véhicule (225), des données de capteur pour un premier et un second système de détection d'explosion de pneu (231, 232), le premier système de détection d'explosion de pneu (231) présentant un temps de réponse inférieur à celui du second système (232),
détecter une explosion de pneu à partir des données du capteur du premier système (231) et, en réponse à la détection de l'explosion de pneu, préparer le véhicule à une manœuvre de sécurité,
confirmer l'explosion du pneu en détectant l'explosion du pneu à partir des données du capteur du second système (232) et, en réponse à la confirmation de l'explosion du pneu, exécuter la manœuvre de sécurité.

2. Unité de commande (130, 140) selon la revendication 1, dans laquelle le premier système de détection d'explosion de pneu (231) comprend un pressostat pour la détection d'une chute de pression ($\Delta p$) et la détection de l'explosion de pneu par le premier système comprend l'évaluation de la chute de pression ($\Delta p$).

3. Unité de commande (130, 140) selon l'une quelconque des revendications 1 à 2, dans laquelle le second système de détection d'explosion de pneu (232) comprend des capteurs de vitesse de roue individuels pour mesurer des vitesses de roue avant individuelles ($\omega_{11}$, $\omega_{12}$) et la détection de l'explosion de pneu par le second système comprend l'évaluation de vitesses de roue avant individuelles ($\omega_{11}$, $\omega_{12}$).

4. Unité de commande (130, 140) selon l'une quelconque des revendications 1 à 3, dans laquelle le second système de détection d'explosion de pneu (232) comprend au moins un IMU, un récepteur RTK, une caméra, un capteur lidar et un capteur radar pour mesurer le mouvement latéral et la détection de l'explosion de pneu par le second système comprend l'évaluation du mouvement latéral.

5. Unité de commande (130, 140) selon l'une quelconque des revendications 1 à 4, dans laquelle l'unité de commande (130, 140) est en outre configurée pour passer à un mode de gestion du mouvement du véhicule (VMM) tolérant aux pannes, dans lequel toute roue présentant un dysfonctionnement est isolée et les commandes de contrôle sont dirigées uniquement vers les roues fonctionnelles.

6. Unité de commande (130, 140) selon l'une quelconque des revendications 1 à 5, dans laquelle l'unité de commande (130, 140) est en outre configurée pour préparer le véhicule à une manœuvre de sécurité en pressurisant le système de freinage pour atteindre la précontrainte, assurant ainsi la préparation à l'engagement immédiat des freins lors de l'activation.

7. Unité de commande (130, 140) selon l'une quelconque des revendications 1 à 6, dans laquelle l'unité de commande (130, 140) est en outre configurée pour préparer le véhicule à une manœuvre de sécurité en permettant au système de direction d'appliquer un couple de direction plus élevé à utiliser pour contrôler l'angle de braquage.

8. Unité de commande (130, 140) selon l'une quelconque des revendications 1 à 7, dans laquelle la manœuvre de sécurité comprend l'activation immédiate du système de freinage.

9. Véhicule poids lourd (100), comprenant :

   une unité de commande selon l'une quelconque des revendications 1 à 8,
   un premier et un second système de détection d'explosion de pneu (231, 232), le premier système de détection d'explosion de pneu (231) présentant un temps de réponse inférieur au second système (232), et

   une pluralité de capteurs de véhicule (220) pour mesurer les données de capteur du premier et du second système de détection d'explosion de pneu (231, 232), dans lequel la pluralité de capteurs de véhicule (220) sont connectés à l'unité de commande (130, 140) par l'intermédiaire d'une interface de véhicule (225).

10. Véhicule poids lourd (100) selon la revendication 9, dans lequel la pluralité de capteurs du véhicule (220) comprennent un pressostat pour détecter une chute de pression ($\Delta p$), des capteurs de vitesse de roue pour mesurer des vitesses individuelles des roues avant ($\omega_{11}$, $\omega_{12}$) et au moins l'un d'entre un IMU, un récepteur RTK, une caméra, un capteur lidar et un capteur radar pour mesurer un mouvement latéral.

11. Procédé de détection précoce et de réponse à l'explosion d'un pneu dans un véhicule poids lourd (100), le procédé comprenant :

    la fourniture (S1) d'un premier et d'un second système de détection d'explosion de pneu (231, 232), le premier système présentant un temps de réponse inférieur au second,
    la détection (S2) d'une explosion de pneu par le premier système (231) et, en réponse à la détection de l'explosion de pneu, la préparation (S3) du véhicule à une manœuvre de sécurité,

    la confirmation (S4) de l'explosion du pneu en détectant l'explosion du pneu par le second système (232) et, en réponse à la confirmation de l'explosion du pneu, l'exécution (S5) de la manœuvre de sécurité.

12. Procédé selon la revendication 11, dans lequel le premier système de détection d'explosion de pneu (231) comprend un pressostat pour la détection d'une chute de pression ($\Delta p$) et la détection de l'explosion de pneu par le premier système comprend l'évaluation de la chute de pression ($\Delta$p).

13. Procédé selon l'une quelconque des revendications 11 à 12, dans lequel le second système de détection d'explosion de pneu (232) comprend des capteurs de vitesse de roue pour mesurer des vitesses individuelles des roues avant ($\omega_{11}$, $\omega_{12}$) et la détection de l'explosion de pneu par le second système comprend l'évaluation de vitesses individuelles des roues avant ($\omega_{11}$, $\omega_{12}$).

14. Procédé selon l'une quelconque des revendications 11 à 13, dans lequel le second système de détection d'explosion de pneu (232) comprend au moins un IMU, un récepteur RTK, une caméra, un capteur lidar et un capteur radar pour mesurer un mouvement latéral et la détection de l'explosion de pneu par le second système comprend l'évaluation du mouvement latéral.

15. Procédé selon l'une quelconque des revendications 11 à 14, dans lequel la préparation (S3) du véhicule pour une manœuvre de sécurité consiste à passer à un mode de gestion des mouvements du véhicule (VMM) tolérant aux pannes, dans lequel toute roue défectueuse est isolée et les commandes de contrôle sont dirigées uniquement vers les roues fonctionnelles.

16. Procédé selon l'une quelconque des revendications 11 à 15, dans lequel la préparation (S3) du véhicule pour une manœuvre de sécurité consiste à pressuriser le système de freinage pour obtenir une précontrainte, assurant ainsi la préparation à l'engagement immédiat des freins lors de l'activation.

17. Procédé selon l'une quelconque des revendications 11 à 16, dans lequel la préparation (S3) du véhicule à une manœuvre de sécurité consiste à permettre au système de direction d'appliquer un couple de direction plus élevé à utiliser pour contrôler l'angle de braquage.

18. Procédé selon l'une quelconque des revendications 11 à 17, dans lequel l'exécution (S5) de la manœuvre de sécurité comprend l'activation immédiate du système de freinage.

19. Programme informatique (550) comprenant des moyens de code de programme pour exécuter les étapes selon l'une quelconque des revendications 1 à 8 lorsque ledit programme est exécuté sur un ordinateur ou sur un circuit de traitement (510) d'une unité de commande (130, 140).

20. Support lisible par ordinateur (560) contenant un programme informatique (570) comprenant des moyens de code de programme pour exécuter les étapes selon l'une quelconque des revendications 1 à 8 lorsque ledit produit de programme est exécuté sur un ordinateur ou sur un circuit de traitement (510) d'une unité de commande (130, 140).

FIG. 1

FIG. 2

EP 4 570 535 B1

FIG. 3

EP 4 570 535 B1

```
┌─────────────────────────────────────────────────┐
│      PROVIDING (S1) A FIRST AND A SECOND TIRE     │
│              DETECTION SYSTEM                      │
└─────────────────────────────────────────────────┘
                        │
                        ▼
┌─────────────────────────────────────────────────┐
│   DETECTING (S2) A TIRE EXPLOSION BY THE FIRST    │
│                  SYSTEM                            │
└─────────────────────────────────────────────────┘
                        │
                        ▼
┌─────────────────────────────────────────────────┐
│        PREPARING (S3) A SAFETY MANEUVER           │
└─────────────────────────────────────────────────┘
                        │
                        ▼
┌─────────────────────────────────────────────────┐
│    CONFIRMING (S4) THE TIRE EXPLOSION BY THE      │
│                 SECOND SYSTEM                      │
└─────────────────────────────────────────────────┘
                        │
                        ▼
┌─────────────────────────────────────────────────┐
│        EXECUTING (S5) THE SAFETY MANEUVER         │
└─────────────────────────────────────────────────┘
```

FIG. 4

130, 140

510

520

530

FIG. 5A

550

560

570

FIG. 5B

FIG. 6

**EP 4 570 535 B1**

**Patent documents cited in the description**

- EP 1659006 A2
- US 5696681 A
- US 2018065428 A1